# EUROPÄISCHE PATENTANMELDUNG

(11) **EP 1 219 201 A2**
(43) Veröffentlichungstag der Anmeldung: **03.07.2002**
(21) Anmeldenummer: 01107194.1
(22) Anmeldetag: 22.03.2001
(51) Int. Cl.: A45D 2/36, A45D 4/16

(54) **Wärmeabgebender Handhabungsgegenstand**

(30) Priorität: 21.12.2000 DE 10064429
(71) Anmelder: Wiegner, Georg, Tsimshatsui, Kowloon (HK)
(72) Erfinder: Wiegner, Georg, Tsimshatsui, Kowloon (HK)
(74) Vertreter: Sparing - Röhl - Henseler Patentanwälte

(57) **Zusammenfassung**

Wärmeabgebender Handhabungsgegenstand mit einem durch Mikrowellenstrahlung erwärmbaren Wärmespeicher mit einer Wärmekapazität, wobei der Wärmespeicher ein Formteil (1, 6) aus einem kunststoff- und/oder naturharzgebundenen wasserhaltigen Rohstoff mit einer für die Wärmespeicherkapazität ausreichenden Masse ist.

## Beschreibung

Die Erfindung betrifft einen wärmeabgebenden Handhabungsgegenstand nach dem Oberbegriff des Anspruchs 1.

Derartige wärmeabgebende Handhabungsgegenstände werden in einer Vielzahl von Anwendungsbereichen eingesetzt, wozu unter anderem Haarkosmetikartikel, wie z. B. Haarwickler, als auch beispielsweise Wärmflaschen, Sitzkissen usw., zählen. Die bekannten wärmeabgebenden Handhabungsgegenstände besitzen dazu einen Wärmespeicher, der im allgemeinen mit heißem Wasser gefüllt wird oder durch eine Mikrowellenstrahlung bedarfsbezogen und wiederholt erwärmbar ist. Die Befüllung des Wärmespeichers mit Wasser führt zu einer deutlichen Gewichtserhöhung des Handhabungsgegenstandes, wodurch die Handhabung erschwert wird. Zudem besteht die ständige Gefahr eines unerwünschten Wasseraustritts bei einer Beschädigung des Handhabungsgegenstandes oder Verschleiß desselben. Wassergefüllte Lockenwickler gibt es deshalb nur mit kleineren Durchmessern.

Aufgabe der Erfindung ist es daher, einen wärmeabgebenden Handhabungsgegenstand nach dem Oberbegriff des Anspruchs 1 zu schaffen, der einfach aufgebaut ist und die Herstellung eines leichteren wärmeabgebenden Handhabungsgegenstandes erlaubt.

Diese Aufgabe wird durch die Merkmale des kennzeichnenden Teils des Patentanspruchs 1 gelöst.

Hierdurch wird ein wärmeabgebender Handhabungsgegenstand geschaffen, der in der Lage ist, Wärme zu speichern, der aus einem stückigen Material besteht und von außen durch eine Mikrowellenstrahlung aufheizbar ist. Der erfindungsgemäße Formkörper hat dabei eine lange Wärmespeicherung, die sich durch eine Erhöhung oder Reduzierung der Masse des Formkörpers in einfacher Weise steigern oder absenken läßt.

Der Formkörper kann in wählbaren Raumformen je nach Art des Anwendungsbereiches hergestellt werden. Eine Wärmedämmung an der Oberfläche zum Schutz gegen Verbrennung ist vorzugsweise vorgesehen und kann von einer Faserbeflockung oder einem nach außen gerichteten Filamentenflor gebildet werden.

Ein bevorzugter Anwendungsbereich sind die Haarkosmetikgeräte, insbesondere Lockenwickler, die für eine dauerhafte oder temporäre Verformung von glatten Haaren verwendet werden. Den verschiedensten Formen dieser Lockenwickler ist gemeinsam, daß Haare zumindest leicht angefeuchtet, strähnchenweise darauf aufgewickelt werden und mit Hilfe von Klammern oder Nadeln für die Zeit der Behandlung dort festgehalten werden. Es genügt allerdings nicht, die Haare nur einfach eine zeitlang dort zu belassen, eine Wärmeeinwirkung oder die Verwendung von chemischen Mitteln gehört dazu, um die Lockenformung zu erhalten, nachdem die Lockenwickler wieder entfernt wurden. Für eine solche Wärmeeinwirkung, die während einer Zeitdauer von 5 bis 30 Minuten durchgeführt wird, kann der Wickelkörper eines Lockenwicklers erfindungsgemäß von einem erfindungsgemäßen Formkörper gebildet werden. Die Wärmeeinwirkung erfolgt dann nicht mehr von außen, wie beispielsweise bei einem Fön oder einer Trockenhaube, sondern von innen aus dem Lockenwickler selbst heraus. Ein aus dem Formkörper bestehender Wickelkörper, der durch Mikrowellenbestrahlung erwärmbar ist, bildet eine eigene Wärmequelle, also einen Wärmewickler. Vor dem Aufwickeln einer Haarsträhne ist diese Wärmequelle von außen erregbar und gibt an eine aufgewickelte Haarsträhne dann Wärme von innen ab. Die Trocknungszeit wird hierdurch erheblich verkürzt, da ein solcher Wickelkörper die Wärme nur durch die aufgewickelten Haare abgeben kann, was zu einer im wesentlichen vollständigen Nutzung der gespeicherten Wärme führt, im Gegensatz zu Föntrocknung, wo der Großteil der Wärme ungenutzt im Raum verfliegt.

Der Formkörper hat ferner den Vorteil, daß er Wärme wesentlich länger hält als Wasser, so daß gegenüber Lockenwicklern mit einem Wasserbehältnis ein Wickelkörper aus dem Formkörper leichtere Wickler mit derselben oder besseren Trocken- und Formenwirkung liefert. Die für den Wickelkörper verwendete Masse an kunststoff- oder naturharzgebundenen Rohstoff bestimmt die Wärmespeicherkapazität. Kürzere Trocknungszeiten bringen nicht nur für den Friseur und die Heimanwendung Vorteile, sondern sind auch weniger belastend für das Haar selbst. Darüber hinaus ist der Energie-Spareffekt für einen Friseursalon bemerkenswert, der täglich stundenlang hochwertige Trocknungsgeräte laufen läßt. Mikrowellen-Öfen heizen mit einer Leistung von 600 bis 1000 Watt in nur 30 Sekunden einen vollen Satz Formkörper-Wickler auf, der dann die Wärme für 5 bis 20 Minuten hält.

Wegen des geringen Gewichts dieser Wickelkörper können auch große Wicklerdurchmesser realisiert werden, d.h. die erfindungsgemäßen Wärmewickler können das volle Spektrum der üblichen Lockenwickler abdecken.

Als kunststoff- und/oder naturharzgebundener wasserhaltiger Rohstoff wird vorzugsweise ein thermoplastisches oder duroplastisches Granulat verwendet, das aus etwa 50% Holz in Spanform oder Sägemehlform sowie aus Mais und Naturharz und Verarbeitungsbeimischungen als auch gegebenenfalls Kunststoffen, wie beispielsweise Polyester, Polyamid, Polyethylen oder Polypropylen, besteht und unter dem Markennamen Fasal von der Firma Austel Research & Development GmbH, Tulln, Österreich vertrieben wird.

Weitere Ausgestaltungen und Vorteile der Erfindung sind den Unteransprüchen und der nachfolgenden Beschreibung zu entnehmen.

Die Erfindung wird nachstehend anhand der in den beigefügten Abbildungen dargestellten Ausführungsbeispiele näher erläutert.
Fig. 1 zeigt einen Längsschnitt eines wärmeabgebenden Handhabungsgegenstandes in Form eines Lockenwicklers gemäß einem ersten Ausführungsbeispiel,
Fig. 2 zeigt einen wärmeabgebenden Handhabungsgegenstand in Form eines Lockenwicklers gemäß einem zweiten Ausführungsbeispiel,
Fig. 3 zeigt einen wärmeabgebenden Handhabungsgegenstand in Form eines Wärmekissens.

Die Erfindung betrifft einen wärmeabgebenden Handhabungsgegenstand mit einem durch Mikrowellenstrahlung erwärmbaren Wärmespeicher mit einer Wärmespeicherkapazität, die vorbestimmbar ist. Der Wärmespeicher ist dabei ein Formteil mit einer Wärmespeicherkapazität, auf die durch die Masse an kunststoff- und/oder naturharzgebundenen wasserhaltigen Rohstoff Einfluß genommen werden kann. Die Masse ist wählbar, wobei das Formteil vorzugsweise aus einem Materialstück besteht, um einen Körper mit einer möglichst gleichmäßigen Materialverteilung zu bilden, so daß eine überwiegend kontinuierlich verteilte Rohstoffmasse erreicht wird. Die Erwärmung des Formteils führt dann zu einer vorzugsweise gleichmäßig auf den Körper verteilten Wärmespeicherung. Kalte Bereiche an dem wärmeabgebenden Formteil können hierdurch vermieden werden. Beispielsweise ist das Formteil als Hohlzylinder oder Flächenstück gespritzt.

Als Formmasse ist ein kunststoff- und/oder naturharzgebundener wasserhaltiger Rohstoff einsetzbar, der sich unter Mikrowellenstrahlung erwärmt und aufgrund seiner guten Wärmespeicherkapazität die Wärme nur langsam abgibt. Als wasserhaltiger Rohstoff bevorzugt ist Holz in Späneform und/oder als Sägemehl, und zwar gegebenenfalls unter Beimisschung von Mais in Mehl und/oder Griesform. Der Anteil an wasserhaltigem Rohstoff beträgt vorzugsweise mindestens 50%, besonders bevorzugt 75 - 85%. Zur Herstellung eines Holzspritzgussgranulats ist der wasserhaltige Rohstoff kunststoff- und/oder naturharzgebunden. Das Naturharz gewährt die biologische Abbaubarkeit, wobei Verarbeitungsadditive wie Naturöle, Plastifizierungsmittel, Pigmente, Trennmittel usw. enthalten sein können. Granulate aus diesem Rohstoff, die auf herkömmlichen Kunststoff-Spritzgußmaschinen verarbeitbar sind, sind von der Firma AUSTEL Research & Development GmbH unter der Typenbezeichung FASAL F 134 bekannt. Blends dieses Rohstoffs mit einem Kunststoffanteil aus beispielsweise Polyester, Polyamid, Polypropylen oder Polyethylen sind unter der Typenbezeichnung FASAL F 465 erhältlich.

Das Formteil ist mit einer Wärmedämmung in einem zu ergreifenden Bereich ummantelt. Die Wärmedämmung kann als eine Faserbeflockung ausgebildet sein, die unter Vermittlung eines Klebers samtartig aufbringbare Fasern mit Faserlängen von 1 bis 5 mm an dem Formteil fixiert. Altemativ können textile Flächengebilde mit einem nach außen gerichteten Faser- oder Filamentenflor als Wärmedämmung an dem Formteil angebracht sein, hierzu gehören auch Klett-Bänder. Derartige Dämmstoffe weisen kleine luftgefüllte Hohlräume zwischen den Fasern auf, die den zu ergreifenden Bereich des wärmeabgebenden Handhabungskörpers für einen Benutzer anfaßbar machen, ohne daß dieser sich die Finger versehentlich verbrennt.

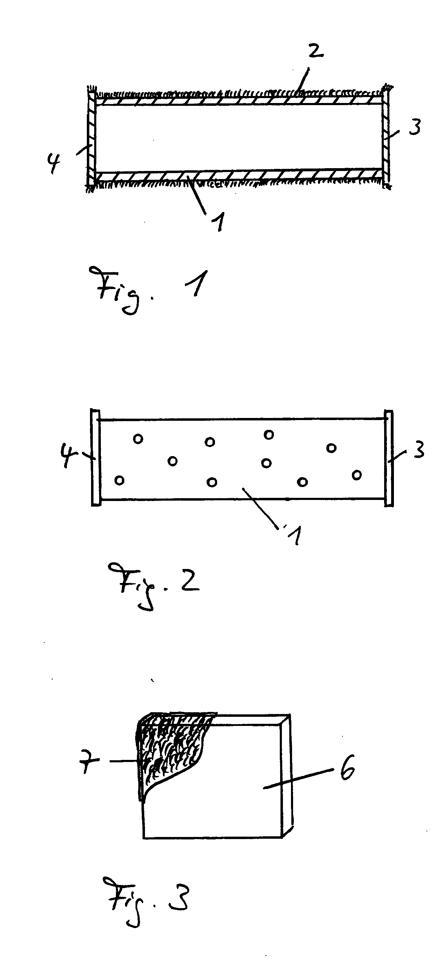

Fig. 1 zeigt einen Lockenwickler gemäß einem ersten Ausführungsbeispiel mit einem Wickelkörper, der von einem Formteil 1 aus einem kunststoff- und/oder naturharzgebundenen Rohstoff gebildet wird. Das Formteil 1 ist als Hohlzylinder ausgebildet, dessen Umfangsfläche von einer Wärmedämmung 2 ummantelt ist. Kopf- und bodenseitig ist das Formteil 1 vorzugsweise verschlossen mittels Seiten 3, 4, die vorzugsweise auch aus einem kunststoff- und/oder naturharzgebundenen Rohstoff bestehen. Die Seiten 3, 4 können fest mit der Umfangsfläche verbunden oder als lösbare Deckel ausgebildet sein. Das Formteil 1 kann die für Lockenwickler typischen Durchmesser von 10 bis 50 mm besitzen.

Damit die Masse eines solchen Lockenwicklers für eine gewünschte Wärmespeicherkapazität ausreicht, besitzen diese Lockenwickler aus einem kunststoff- und/oder naturharzgebundenen Rohstoff vorzugsweise eine Hohlzylinder-Wandstärke von 3 bis 6 mm.

Die Wärmedämmung 2 ist ebenfalls wie vorstehend ausbildbar, bevorzugt ist eine Beflockung mit Nylon-, Perlon- oder Baumwollfasern, deren Längen im Bereich von 1 bis 4 mm liegen können und unter Vermittlung eines Klebers an der Umfangsfläche des Formteils 1 in dichter Anordnung haften.

Zur Benutzung eines solchen Lockenwicklers wird dieser für wenige Sekunden einer Mikrowellenstrahlung ausgesetzt, wodurch er sich erwärmt. Auf diesen erwärmten Lockenwickler wird dann zu trocknendes Haar aufgewickelt. Die vorstehend beschriebene Wärmedämmung 2 bildet gleichzeitig eine Aufwickelhilfe.

Zur Befestigung des Lockenwicklers im Haar können bekannte Spangen verwendet werden.

Fig. 2 zeigt ein Formteil gemäß einem zweiten Ausführungsbeispiel, das sich von dem ersten Ausführungsbeispiel dadurch unterscheidet, daß der Hohlzylinder in seiner Umfangsfläche verteilt angeordnete feine Luftlöcher 5 aufweist, die von der nicht dargestellten Wärmedämmung ausgenommen sein können oder auch von dieser überdeckt sein können, wenn beispielsweise ein Klettband das Formteil 1 ummantelt. Durch die Luftlöcher 5 kann eine Luftzirkulation aus dem Innenraum des Formteils 1 erreicht werden. Femer kann im Falle einer Füllung des Innenraumes des Formteils 1 mit einem verdampfbaren oder sich verflüchtigenden Medium der Austritt dieses Mediums in das jeweils aufgewickelte Haar beim Trocknen desselben bewirkt werden.

Fig. 3 zeigt einen wärmeabgebenden Handhabungsgegenstand in Form eines Wärmekissens. Das Wärmekissen umfaßt ein Flächenstück 6 aus einem kunststoff- und/oder naturharzgebundenen Rohstoff wie vorstehend beschrieben. Eine Wärmedämmung 7, die in Fig. 3 teilweise weggeschnitten ist, umgibt vorzugsweise nach Art eines Bezuges das Flächenstück 6.

Gemäß weiterer, nicht dargestellter Ausführungsbeispiele kann das Formteil beispielsweise einen Kamm, den Borstentragkörper einer Bürste, den Warmbereich einer Wärmflasche usw. bilden.

## Patentansprüche

1. Wärmeabgebender Handhabungsgegenstand mit einem durch Mikrowellenstrahlung erwärmbaren Wärmespeicher mit einer Wärmekapazität, **dadurch gekennzeichnet, daß** der Wärmespeicher ein Formteil (1, 6) aus einem kunststoff- und/oder naturharzgebundenen wasserhaltigen Rohstoff mit einer für die Wärmespeicherkapazität ausreichenden Masse ist.

2. Handhabungsgegenstand nach Anspruch 1, **dadurch gekennzeichnet, daß** das Formteil (1, 6) mit einer Wärmedämmung (2, 7) in einem zu ergreifenden Bereich ummantelt ist.

3. Handhabungsgegenstand nach Anspruch 1 oder 2, **dadurch gekennzeichnet, daß** der wasserhaltige Rohstoff aus Holz und/oder Mais in Span- oder Mehlform besteht.

4. Handhabungsgegenstand nach einem der Ansprüche 1 bis 3, **dadurch gekennzeichnet, daß** der Kunststoffanteil unter 50 % liegt.

5. Handhabungsgegenstand nach einem der Ansprüche 1 bis 4, **dadurch gekennzeichnet, daß** der Kunststoffanteil Polypropylen, Polyester, Polyamid oder Polyethylen umfaßt.

6. Handhabungsgegenstand nach einem der Ansprüche 1 bis 5, **dadurch gekennzeichnet, daß** der Kunststoffanteil aus einem biologisch abbaubaren Kunststoff besteht.

7. Handhabungsgegenstand nach einem der Ansprüche 1 bis 6, **dadurch gekennzeichnet, daß** das Formteil aus einem thermoplastischen Werkstoff aus Holz, insbesondere Fasal, besteht.

8. Handhabungsgegenstand nach einem der Ansprüche 1 bis 7, **dadurch gekennzeichnet, daß** die Wärmedämmung (2, 7) als eine Faserbeflockung ausgebildet ist.

9. Handhabungsgegenstand nach einem der Ansprüche 1 bis 7, **dadurch gekennzeichnet, daß** die Wärmedämmung (2, 7) von einem textilen, nach außen gerichteten Faser- oder Filamentflor gebildet wird.

10. Handhabungsgegenstand nach einem der Ansprüche 1 bis 9, **dadurch gekennzeichnet, daß** das Formteil (1) den Wickelkörper eines Haarwicklers bildet.

11. Handhabungsgegenstand nach Anspruch 10, **dadurch gekennzeichnet, daß** der Wickelkörper als Hohlzylinder ausgebildet ist.

12. Handhabungsgegenstand nach Anspruch 11, **dadurch gekennzeichnet, daß** der Hohlzylinder kopf- und bodenseitig verschließbar ist.

13. Handhabungsgegenstand nach Anspruch 12, **dadurch gekennzeichnet, daß** der Hohlzylinder mit einem unter Wärmeeinfluß verdampfenden Medium befüllbar ist, wobei der Hohlzylinder in seiner Mantelfläche Luftlöcher (5) für einen Austritt des verdampfbaren Mediums aufweist.

14. Handhabungsgegenstand nach einem der Ansprüche 11 bis 13, **dadurch gekennzeichnet, daß** der Hohlzylinder auf seiner Umfangsfläche mit einem Dämmstoff umgeben ist, der kleine luftgefüllte Hohlräume aufweist.

15. Handhabungsgegenstand nach einem der Ansprüche 1 bis 9, **dadurch gekennzeichnet, daß** das Formteil eine Bürste bildet, deren Griff von einer Wärmedämmung ummantelt ist.

16. Handhabungsgegenstand nach einem der Ansprüche 1 bis 9, **dadurch gekennzeichnet, daß** das Formteil einen Kamm bildet.

17. Handhabungsgegenstand nach einem der Ansprüche 1 bis 9, **dadurch gekennzeichnet, daß** das Formteil den Warmbereich einer Wärmflasche bildet.
